# EUROPEAN PATENT APPLICATION

(11) **EP 2 468 491 A1**
(43) Date of publication of application: **27.06.2012**
(21) Application number: 11780154.8
(22) Date of filing: 29.04.2011
(51) Int. Cl.: B30B 11/28, B30B 1/26, B01J 2/20

(54) **BIOMASS EXTRUSION MOLDING MACHINE WITH HORIZONTALLY-PLACED ANNULAR DIE**

(30) Priority: 13.05.2010 CN 201010171178
(71) Applicant: Beijing Aoke Ruifeng Mechanical & Electrical Technology Co., Ltd., Beijing 100101 (CN)
(72) Inventor: SHI, Shutian, Beijing 100101 (CN); JIA, Zhenhai, Beijing 100101 (CN); LI, Yuan, Beijing 100101 (CN)
(74) Representative: BRP Renaud & Partner
(86) International application number: PCT/CN2011/073499
(87) International publication number: WO 2011/140933

(57) **Abstract**

The present invention relates to a biomass extrusion molding machine with horizontally-placed annular die, **characterized in** including a feed material receiving hopper, a material-blocking cover, an extrusion device, a driving device; a discharged material receiving hopper, a frame, a motor and an extrusion device horizontally fixed on the frame and constituted by an extrusion wheel and a die disc, wherein the die disc is provided with a plurality of die holes which are radially and uniformly distributed in a horizontal direction. In the present invention, without an agitator and a cutter for cutting off materials, each of the die holes may uniformly extrude the materials, the die disc has a small thickness, the molding die hole may be of a size selectable from a broad range, and the machine has a superior molding effect, high efficiency and a strong flexibility.

## Description

### Field of the Invention

The present invention relates to a biomass extrusion molding machine with horizontally-placed annular die, in particular adapts to extrude separate biomass materials into compact briquetting fuel or feed.

### Background to the Invention

The existing biomass extrusion molding machine extrudes materials out of molding holes with a friction force of an extrusion mechanism, so as to form a required extruded product. The current designs mainly include two different forms: one form is a ring-die machine where a die disc is vertically arranged, **characterized in that** the molding die holes are uniformly and radially distributed in a circumferential direction, after entering an extrusion chamber, wherein the materials must be transferred to each of the die holes by an agitator, otherwise, the materials would be non-uniform and easy to choke up the circular-die machine; the other form is a flat-die machine where the die disc is horizontally arranged, **characterized in that** the molding die holes are uniformly and vertically distributed in the form of single row or multiple rows, the die disc has a large thickness and the die holes have a small size, resulting in poor efficiency, wherein in the case of employing the layout with die holes in the form of multiple rows, extrusion speeds of individual row of the die holes are different and extrusion conditions are relatively complex, so that it is difficult to control the extrusion effect.

### Summary of the Invention

In order to overcome the above defects, the present invention provides a biomass extrusion molding machine with horizontally-placed annular die, where each of the die holes can uniformly extrude the materials without an agitator, the die disc has a small thickness, the molding die hole may be of a size selectable from a broad range, and the machine has a superior molding effect, high efficiency and a strong flexibility.

The technical solution of the invention is:
It is provided a biomass extrusion molding machine with horizontally-placed annular die, which includes a feed material receiving hopper, a material-blocking cover, an extrusion device, a driving device, a discharged material receiving hopper, a frame, a motor and said extrusion device horizontally fixed on the frame and constituted by an extrusion wheel and a die disc, wherein the die disc includes a plurality of die holes which are radially and uniformly distributed in a horizontal direction.

The driving device is composed of a main shaft, a pair of driving belt pulleys, a joint V-belt and a corresponding fixed connector, the main shaft being vertically arranged, and the driving belt pulleys and the joint V-belt being horizontally arranged.

The feed material receiving hopper, the material-blocking cover and the die disc each has a rotary construct whose rotary axis coincides with a main shaft axis of the driving device and is closely arranged from top to bottom in a vertical direction.

The die disc, having an outer contour shaped to be frustum cone-like, is provided with die holes at the middle in a thickness direction whose central lines meet at a point on an axis of the die disc, frustum cone-like interior of the die disc forms a cylindrical space in which the extrusion wheel is fixed. When the extrusion wheel rotates, the materials are extruded into the die holes, and during continuous material feeding and repetitious rolling process, the separate materials are finally extruded into a briquetting with a larger density to be discharged out of the die holes.

The extrusion wheel is composed of a pressing wheel, a pressing wheel shaft and a corresponding fixed-connection device, wherein the axis of the extrusion wheel is arranged parallel to the main shaft, and fixed on the main shaft by means of the fixed-connection device to run at the same rotary speed as that of the main shaft, and wherein the pressing wheel is horizontally arranged on the pressing wheel shaft and arranged in the same horizontal plane as the die holes.

The number of the extrusion wheel is one, two, three or four, wherein when the number of the extrusion wheel is more than two, the extrusion wheels are uniformly arranged within the die disc at an axis which is the central axis of the die disc and the rotary axes of the extrusion wheels are the rotary axis of the die disc, and the maximum rotary radius thereof is situated in the vertical section plane where the die holes are located.

The discharged material receiving hopper is constructed to be front-and-rear symmetrical and is formed at an angle with respect to the horizontal plane, with a section being wide at the top and narrow at the bottom so as to form a tapered opening. With such construct, the extruded materials discharged out of the die holes are directed and gathered at the guide opening at both front and back ends to facilitate collection.

The feed material receiving hopper has a rotary construct composed of an upper portion, middle and lower portion, wherein the upper portion, has a generatrix in the form of "/" and forms a conical surface which large at the top and small at the bottom after rotation, thereby forming an opening with a certain gradient, with which construct the separate materials fall into the feed material receiving hopper as far as possible and slide into the lower space under the gravity thereof and the vibration of the device in operation; the middle portion has a generatrix in the form of ">"and forms a construct being narrow at the top and the bottom and wide in the middle after rotation, which construct helps the materials collected into the upper portion to disperse to loosely and uniformly fall into the cylindrical space of the die disc; and wherein the lower portion has a curved surface with a certain height, wherein the connections between the upper, middle and lower portions have the same size at joints and are closely connected without any gap.

The material-blocking cover is composed of an upper portion that is a circular plane and a lower portion that is a frustum cone-like curved plane, the frustrum cone-like curved plane being small at the top and large at the bottom, wherein the upper and lower portions have a same size at joints and are closely connected without any gap. The minimum section of the frustum cone-like curved plane of the lower portion of the material-blocking cover has a diameter larger than a circumcircle diameter of the die disc, a height of the frustum cone-like curved plane is larger than a vertical size from an upper surface of the die disc to a bottom of the die holes. With such construct, when the extruded materials are too long to fall off automatically after being discharged out of the disc holes, the extruded materials, after the front end thereof contact the inclined plane at the lower of the material-blocking cover, are directed along the inclined plane so as to bend and finally fall off automatically.
The advantageous technical effects are as follows:
1. By horizontally arranging the die disc and uniformly and radially distributing the die holes in a circumferential direction, the separate materials from the feed material receiving hopper can be uniformly distributed into the cylindrical space of the die disc in a natural state without need for providing any agitator. With such simple construct, the following case is avoided: due to the non-uniformity of the materials after being fed in an ordinary ring-die machine , the materials over the die disc are too few to be extruded, and the materials under the die disc are stacked so much that the machine is choked, thereby improving the efficiency of the device and reducing the possibility of choking-up.
2. By horizontally arranging the die holes, a massive die disc may be avoided, the length of the die holes can be changed so as to change the extrusion effects only by changing the size of the die disc in the horizontal direction. In addition, by designing the material-blocking cover in the form of a cap and with a height in operation being enough to shield the die holes, when contacting the inclined plane of the material-blocking cover, the extruded materials with a too large length are resisted to bend automatically and readily fall off automatically as the length increases. There is no need for any cutter for cutting off the materials. In addition, the extruded materials can be prevented from bursting forth out of the die holes to hurt any person.
3. By designing the discharged material receiving hopper with a certain gradient, on the one hand, the hotter materials discharged out of the die holes are prevented from breaking, and, on the other hand, the extruded materials have an increased sliding time and have sufficient time to be cooled and hardened before leaving the guide opening so as to maintain the shape. In addition, the sliding time of the extruded materials is increased to prevent the guide outlet from being jammed since the guide opening becomes narrow.

### Brief Description of the Drawings

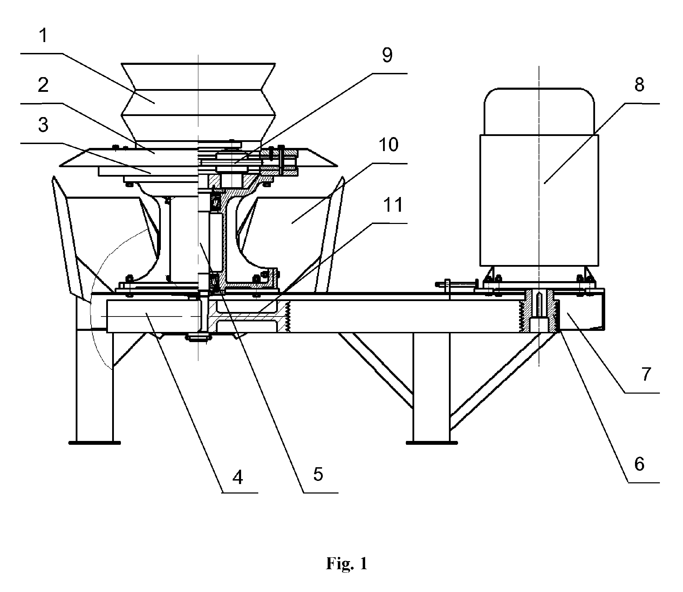

Fig.1 is a schematic diagram of the present invention.

### Description of the Preferred Embodiments

Referring to Fig.1, the present invention provides a biomass extrusion molding machine with horizontally-placed annular die, which includes a feed material receiving hopper 1, a material-blocking cover 2, an extrusion device, a driving device, a discharged material receiving hopper 10, a frame 7, a motor 8 and an extrusion device horizontally fixed on the frame 7 and constituted by an extrusion wheel 9 and a die disc 3, wherein the die disc 3 is fixed on the frame and includes a plurality of die holes, which are radially and uniformly distributed in the horizontal direction and have an equal size, and whose central axes meet at a point lying on the central axis of the die disc 3. The extrusion molding machine incorporates the advantages of both types of existing biomass extrusion molding machines and overcomes their respective defects with a simple construct.

The feed material receiving hopper 1, material-blocking cover 2 and die disc 3 each has a rotary construct whose rotary axis coincides with the main shaft axis of the driving device and is closely arranged from top to bottom in the vertical direction. The feed material receiving hopper 1 has a rotary construct composed of an upper, middle and lower portion, the upper portion has a generatrix in the form of "/"and forms a conical surface large at the top and small at the bottom after rotation, thereby forming an opening with a certain gradient, being, with which construct the separate materials fall into the feed material receiving hopper 1 as far as possible and slide into the lower space under the gravity thereof and the vibration of the device in operation; the middle portion has a generatrix in the form of ">"and forms a construct being narrow at the top and the bottom and wide in the middle, which construct helps the materials collected into the upper portion to disperse to loosely and uniformly fall into the cylindrical space of the die disc 3; the lower portion has a curved surface with a certain height, wherein the connections between the upper, middle and lower portions have the same size at joints and are closely connected without any gap. Herein, the connection manner can be welding, and it is also possible to employ any other manner which has an equivalent connection effect. The die disc 3, having an outer contour shaped to be frustum cone-like, can be provided with a loop of grooves at the connection between the upper surface of the die disc 3 and the feed material receiving hopper 1, so as to facilitate close connection to the feed material receiving hopper 1 and prevent material leakage. In addition, when the extruded materials choke up the machine, the die disc 3 can be quickly disassembled for maintenance, whereby it is convenient for operation. The die holes of the die disc 3 are horizontally and radially arranged, whose lengths can be changed to control the molding effects of various kinds of materials. The material-blocking cover 2 is composed of a circular surface having several screw holes arranged thereon and fixed on the upper surface of the die disc 3, and a frustum cone-like curved surface with a slope, the height of the frustum cone-like curved surface being sufficient to shield the die holes during operation. When the extruded materials discharged out of the die holes have a sufficient length but still cannot fall off automatically, after reaching a certain length, the extruded materials contact the frustum cone-like curved surface of the material-blocking cover 2 so as to bend under the resistance and finally fall off automatically. Meanwhile, the extruded materials can be prevented from bursting forth out of the die holes to hurt any person.

The extrusion wheel 9 is composed of a pressing wheel, a pressing wheel shaft and a corresponding fixed-connection device. The axis of the extrusion wheel 9 is arranged parallel to the main shaft 5, and is fixed on the main shaft 5 by means of the fixed-connection device to run at the same rotary speed as that of the main shaft 5. The pressing wheel is horizontally arranged on the pressing wheel shaft and arranged in the same horizontal plane as the die holes. With such design, the material can be pressed into the die holes as much as possible when the extrusion wheel 9 rolls each time.

The extrusion device in the present invention is a critical component to undergo a force and is a damageable component during operation, which can be made of a material with a high strength and be treated by an appropriate processing, for example, by overlaying wearable powders at the top of the pressing wheel and the feeding end of the die holes, thereby improving the lifetime thereof. The critical extrusion components of the extrusion device can be designed as an integral construct, such as an integrally cast extrusion wheel, also can be designed as a replaceable unit easy to be disassembled, for example, designing each of the die holes of the die disc as a block unit and assembling a plurality of such units into an integral construct. And the pressing wheel can be designed such that the extrusion components thereof can be removable components.

The outlet hopper 10 is fixed on the frame and located at a lower portion of the die disc, which is constructed to be front-and-rear symmetrical and is at an angle with respect to the horizontal plane, with a section being wide at the top and narrow at the lower so as to form a tapered opening. With such construct, the extruded materials discharged out of the die holes are directed and gathered at the guide opening at both front and back ends to facilitate collection.

The main shaft 5 is vertically arranged, closely connected to the extrusion wheel 9 at an upper end and to a large belt pulley 11 at a lower end , and fixed on the frame 7 at the middle by means of a bearing. In order to transmit power, the large belt pulley 11 is connected to the small belt pulley 6 by means of a joined V-belt 4 which skids when the machine is choked up to thereby cause the extrusion wheel to be stalled during operation, thus preventing the device from being damaged. The small belt pulley is closely connected to the shaft of the motor so as to transmit the power, and the motor is horizontally fixed on the frame.

## Claims

1. A biomass extrusion molding machine with horizontally-placed annular die, **characterized in that**, it includes a feed material receiving hopper, a material-blocking cover, an extrusion device, a driving device, a discharged material receiving hopper, a frame, a motor, and the extrusion device horizontally fixed on the frame and constituted by an extrusion wheel and a die disc, wherein the die disc includes a plurality of die holes which are radially and uniformly distributed in a horizontal direction.

2. The biomass extrusion molding machine with horizontally-placed annular die according to claim 1, **characterized in that**, the driving device is composed of a main shaft, a pair of driving belt pulleys, a joint V-belt and a corresponding fixed connector, the main shaft being vertically arranged, and the driving belt pulleys and the joint V-belt being horizontally arranged.

3. The biomass extrusion molding machine with horizontally-placed annular die according to claim 1, **characterized in that**, the feed material receiving hopper, the material-blocking cover and the die disc each has a rotary construct whose rotary axis coincides with a main shaft axis of the driving device and is closely arranged from top to bottom in a vertical direction.

4. The biomass extrusion molding machine with horizontally-placed annular die according to claim 1, **characterized in that**, the die disc, having an outer contour shaped to be frustum cone-like, is provided with die holes at the middle in a thickness direction whose central lines meet at a point on an axis of the die disc, frustum cone-like interior of the die disc forms a cylindrical space in which the extrusion wheel is fixed.

5. The biomass extrusion molding machine with horizontally-placed annular die according to claim 1, **characterized in that**, the extrusion wheel is composed of a pressing wheel, a pressing wheel shaft and a corresponding fixed-connection device, wherein the pressing wheel is horizontally arranged on the pressing wheel shaft, and wherein the axis of the extrusion wheel is parallel to the main shaft and fixed on the main shaft by means of the fixed-connection device to run at the same rotary speed as the main shaft.

6. The biomass extrusion molding machine with horizontally-placed annular die according to claim 1 or 5, **characterized in that**, the number of the extrusion wheel is one, two, three or four, wherein when the number of the extrusion wheel is more than two, the extrusion wheels are uniformly arranged within the die disc at an axis which is the central axis of the die disc, and maximum rotary radius when the extrusion wheels rotate is situated in a vertical section plane where the die holes are located.

7. The biomass extrusion molding machine with horizontally-placed annular die according to claim 1 or 3, **characterized in that**, the discharged material receiving hopper is constructed to be front-and-rear symmetrical and is formed at an angle with respect to the horizontal plane, with a section being wide at the top and narrow at the bottom so as to form a tapered opening, thereby facilitating collection of extruded materials.

8. The biomass extrusion molding machine with horizontally-placed annular die according to claim 1 or 3, **characterized in that**, the feed material receiving hopper has a rotary construct composed of an upper portion, middle and lower portion, wherein the upper portion, has a generatrix in the form of "/" and forms a conical surface large at the top and small at the bottom after rotation, thereby forming an upper opening, wherein the middle portion has a generatrix in the form of ">" and forms a construct being narrow at the top and the bottom and wide in the middle, and wherein the lower portion has a curved surface with a certain height, wherein the upper, middle and lower portions have a same size at joints and are closely connected without any gap.

9. The biomass extrusion molding machine with horizontally-placed annular die according to claim 1, **characterized in that**, the material-blocking cover is composed of an upper portion that is a circular plane and a lower portion that is a frustum cone-like curved plane, the frustrum cone-like curved plane being small at the top and large at the bottom, wherein the upper and lower portions have the same size at joints and are closely connected without any gap.

10. The biomass extrusion molding machine with horizontally-placed annular die according to claim 9, **characterized in that**, minimum section of the frustum cone-like curved plane of the lower portion of the material-blocking cover has a diameter larger than a circumcircle diameter of the die disc, a height of the frustum cone-like curved plane is larger than a vertical size from an upper surface of the die disc to a bottom of the die holes.
